# DEMANDE DE BREVET EUROPEEN

(11) **EP 1 860 865 A1**
(43) Date de publication de la demande: **28.11.2007**
(21) Numéro de dépôt: 07016530.3
(22) Date de dépôt: 19.07.2005
(51) Int. Cl.: H04N 5/00, H04N 7/173

(54) **Platine de salon multi-fonctions, et système comprenant une telle platine**

(30) Priorité: 23.07.2004 FR 0408159
(62) Demande divisionnaire de: 05291539.4
(71) Demandeur: Le Club Confort et Sécurité, 77250 Veneux les Sablons (FR)
(72) Inventeur: Czuba, Rodolphe, 89150 Saint Valerien (FR); Serin, Bernard, 77250 Veneux les Sablons (FR)
(74) Mandataire: Pontet, Bernard

(57) **Abrégé**

L'invention concerne une platine de salon multifonction 100 % numérique apte à recevoir des signaux numériques de transmission TV et apte à être utilisée comme magnétoscope numérique, celui-ci étant doté d'une capacité d'enregistrement sur disque dur et d'archivage par graveur DVD. La platine peut être basée sur une architecture micro-ordinateur de type PC ou basée sur une carte électronique propriétaire.

Le raccordement de la platine multifonction au téléviseur s'effectue par un unique câble HDMI, ou Péritel ou RCA.

La platine multifonction peut être utilisée comme serveur audio vidéo afin de diffuser des contenus multimédia vers des terminaux secondaires 100 % numériques, via un réseau Ethernet.

Le pilotage des terminaux secondaires et de la platine peut s'effectuer à partir d'une télécommande dédiée.

## Description

La présente invention se rapporte à une platine de salon multi-fonctions. Elle concerne également un système comprenant une telle platine.

Il existe à la vente des centaines de produits pour faciliter le confort et les loisirs dans les foyers : micro-ordinateurs, décodeurs, téléviseurs, lecteurs de CD/DVD, home-cinéma, magnétoscopes analogiques ou numériques, jeux vidéos,... cependant souvent la mise en route et l'utilisation de ceux-ci demeurent compliquées. En effet, les utilisateurs doivent acquérir, sans cesse, de vastes connaissances pour maîtriser des technologies très évolutives et être en mesure de choisir des produits adaptés à leurs objectifs. Les grands groupes électroniques ont une vision parcellaire et très standardisée des besoins des particuliers. Ils ne semblent pas toujours se préoccuper de l'uniformité et de la transversalité des divers équipements du foyer de chaque utilisateur.

Ainsi, au fur et à mesure des achats de leurs équipements, les utilisateurs se retrouvent notamment avec du matériel disparate et de multiples télécommandes. A titre d'exemple, en France, l'avènement de la Télévision Numérique Terrestre entraînera une évolution progressive des 23 millions de foyers équipés d'au moins 1 téléviseur, et plus particulièrement les 10 millions de foyers non abonnés au satellite ou au câble, de la réception des chaînes analogiques vers la Télévision Numérique Terrestre. Cette évolution nécessite l'achat d'un décodeur spécifique probablement accompagné d'une nouvelle télécommande, ou d'un nouveau téléviseur intégrant ce décodeur ou téléviseur numérique.

On connaît des appareils de type "Set-Top-Box" positionnés à proximité d'un téléviseur ou des média PC. Ces appareils sont réalisés à base d'une architecture micro-ordinateur. Cependant, les signaux vidéo générés par ces appareils sont identiques à ceux générés par un micro-ordinateur ( de type vidéo composite ou s-vidéo )donc de qualité insuffisante pour obtenir une image de grande qualité sur un téléviseur. Par ailleurs l'intégration de tels appareils n'est pas aisée puisque la connectique informatique diffère de la connectique TV, en particulier en Europe. La plupart des téléviseurs sont équipés d'un ou plusieurs connecteurs Péritel et seuls les plus récents d'entre-eux peuvent recevoir une connexion vidéo composite.

La présente invention a pour but un nouvel appareil multi-fonctions apte à générer un signal vidéo de plus grande qualité pour un téléviseur.

Un autre but de l'invention est un appareil plus simple d'utilisation,fonctionnant notamment avec une seule télécommande,et apte donc à s'intégrer naturellement dans un environnement TV.

On atteint au moins l'un des buts précités avec une platine de salon multi-fonctions comprenant des moyens de réception pour recevoir des signaux analogiques et numériques de transmission TV et des moyens de stockage numérique pour une utilisation comme magnétoscope numérique. Selon l'invention, cette platine comprend une carte électronique comprenant:
- des moyens aptes à gérer un flux audio/vidéo au moyen d'une voie audio analogique et d'une voie vidéo numérique,
- un encodeur TV pour convertir le signal vidéo numérique de type DVO de la voie vidéo numérique en un signal vidéo analogique entrelacé avec RVB séparés, et
- au moins un connecteur péritel de sortie regroupant un signal audio analogique provenant de ladite voie audio analogique et ledit signal vidéo analogique entrelacé avec RVB séparés.

Selon l'invention, la carte électronique comprend un connecteur de sortie de type DVI associé à un "formateur" DVI ("transmitter DVI" en anglais) pour formater le signal vidéo numérique DVO en un signal vidéo numérique de type DVI. La carte électronique comprend également un connecteur de sortie de type HDMI (High Definition Multimedia Interface) fournissant de la vidéo et de l'audio numériques. Les signaux audio et vidéo numériques de ce connecteur peut provenir du signal vidéo numérique de type DVI et d'un signal audio numérique de type S/PDIF.

Le signal audio peut être monophonique, mais il est de préférence stéréophonique de type NICAM.

Avantageusement, la platine comprend en outre des moyens de réception pour recevoir des signaux analogiques et numériques de transmission radio. Elle peut recevoir la radio FM via une antenne associée à un tuner radio ou via une parabole de réception satellite.

Différentes fonctionnalités peuvent alors être concrétisées au moyen de cartes filles spécifiques. Mais, la platine peut aussi être basée sur une carte électronique propriétaire gérant différentes fonctionnalités selon l'invention. Dans chacun des cas, la platine comprend un système d'exploitation et une interface logicielle dédiée.

Avec la platine selon l'invention, on peut connecter un téléviseur via un unique câble péritel. Le téléviseur reçoit alors un signal vidéo analogique entrelacé avec RVB (ou RGB pour "Red" "Green" "Blue"), c'est à dire un flux vidéo dont les signaux de couleurs rouge, vert et bleu sont séparés. En effet, les cartes mères informatiques avec sortie TV proposent une sortie vidéo composite ou une sortie S-Vidéo pour lesquelles le signal vidéo analogique est entrelacé mais avec les trois couleurs de base mélangées. D'une façon générale, les micro-ordinateurs de type PC, disposent de sorties vidéo analogiques dites progressives (VGA), S-Vidéo et vidéo composite donc les trois couleurs mélangées.

Selon l'invention, contrairement aux systèmes existants, la vidéo et l'audio sont directement disponibles au sein d'un unique connecteur péritel fixé à la platine. La connexion au téléviseur est donc simplifiée.

Pour un téléviseur numérique haute définition, le signal vidéo numérique est généré par le "formateur" DVI au format adéquat et disponible sur le connecteur DVI : format pour la TV numérique ou format pour des jeux vidéo. En effet, la platine peut être utilisée comme console de jeux.

Selon l'invention, la platine peut comprendre un second connecteur péritel apte à fournir simultanément les mêmes signaux audio et vidéo que ledit au moins un connecteur péritel. Ainsi, deux moyens d'affichage tels que deux téléviseurs peuvent être connectés à la platine. On peut alors réaliser un système dans lequel la platine comprend au moins deux connecteurs péritel de sortie. L'un des deux connecteurs péritel est connecté à un premier module externe de transmission sans fil apte à transmettre les signaux audio et vidéo vers un second module de réception sans fil distant connecté à un téléviseur via un câble péritel. On peut ainsi avoir un premier téléviseur directement connecté à un premier connecteur péritel et un second téléviseur installé dans une autre pièce et connecté au second connecteur péritel via les modules de communication sans fil. Lorsque les deux connecteurs péritel, génèrent un même flux audio/vidéo, les deux téléviseurs affichent une même émission provenant de la platine.

Selon une caractéristique avantageuse de l'invention, ladite carte électronique comprend :
- des moyens aptes à gérer en parallèle au moins un second flux audio/vidéo indépendant du premier flux audio/vidéo au moyen d'une seconde voie audio analogique et d'une seconde voie vidéo numérique,
- un second encodeur TV pour convertir le signal vidéo numérique de la seconde voie vidéo numérique en un second signal-vidéo analogique entrelacé avec RVB , et
- un autre connecteur péritel de sortie regroupant un signal audio analogique provenant de ladite seconde voie audio analogique et ledit second signal vidéo analogique entrelacé en RVB.

Ainsi le système est multi-tâches. En effet, il devient possible, par exemple dans le système tel que décrit ci-dessus, de visualiser deux émissions différentes provenant de la platine, dans deux lieux différents.

De préférence, la platine selon l'invention comprend en outre des moyens de connexion à un réseau de communication externe de type Internet au moyen par exemple d'un modem ADSL, du câble ou tout autre moyen de connexion à Internet. Elle peut aussi se connecter à un réseau de communication interne de type Ethernet, Wi-fi, par courant porteur, ou autre.

Des signaux de transmission TV peuvent provenir d'un réseau hertzien (analogique ou numérique), la platine est alors équipée d'au moins une carte tuner TV et/ou d'un module de réception et/ou de décodage des signaux de la télévision analogique et numérique terrestre.

Des signaux de transmission TV peuvent provenir d'un réseau satellite, la platine est alors équipée d'au moins une carte tuner TV faisant fonction de décodeur satellite; d'un réseau câblé; ou encore d'un réseau ADSL, la platine est alors équipée d'au moins un modem ( ou carte ) ADSL.

De préférence, la platine comprend des moyens de décryptage pour décoder des signaux de transmission TV transmis sous forme codée. Il s'agit en particulier des chaînes cryptées telles que Canal+® ou des chaînes satellites telles que celles comprises dans le bouquet satellite de TPS® ou Tv Web ou Tv NT (numérique terrestre). Ces moyens de décodage peuvent être des applications logicielles associées à un lecteur de carte.

Les modules de décryptage peuvent être soit incorporés sur la carte électronique, soit sur port de type PCMCIA.

Les moyens de stockage comprennent un convertisseur analogique numérique et un disque dur de façon à enregistrer des signaux audio/vidéo analogiques après conversion; ledit disque dur étant également prévu pour l'enregistrement des signaux audio/vidéo numériques reçus par la platine. Les signaux sont notamment enregistrés sous format MPEG2, MPEG4 ou autre. La platine comprend un graveur multi-format DVD pour archiver le contenu des moyens de stockage de la fonction magnétoscope numérique.

Pour permettre une lecture audio et vidéo de tout type de format, la platine comprend en outre un lecteur multi-format CD/DVD.

Avantageusement, la carte électronique (ou carte mère associée à une carte fille) comprend en plus des sorties péritel (scart), DVI et HDMI:
- des moyens pour générer en sortie un flux vidéo analogique progressif (VGA);
- des moyens pour générer en sortie un flux vidéo composite;
- des moyens pour générer en sortie un flux vidéo de type S-vidéo;
- des moyens pour générer en sortie un flux audio analogique pour une utilisation de qualité "home-cinema" au format 2.1 ou 5.1 par exemple, pour des ensembles décodeurs externes et haut parleur de type PC;
- des moyens pour générer en sortie un flux audio numérique de type S/PDIF pour connecter une chaîne Hi-Fi ou "homme cinema" ayant fonction d'amplification et de raccordement de haut parleur; et
- des moyens d'interfaçage avec un clavier et une souris.

La platine comprend en outre un récepteur IR pour communiquer de façon sans fil avec une télécommande de type IR classique en mode unidirectionnel.

Selon une caractéristique préférée de l'invention, cette télécommande pourra être bidirectionnelle interactive dotée également d'un émetteur et d'un récepteur, la platine comprend également un émetteur et un récepteur. De préférence, la télécommande peut être programmée pour également commander le téléviseur connecté à la platine. Avantageusement, la télécommande est dotée d'un écran d'affichage pour afficher des informations provenant (en retour des ordres transmis) de l'émetteur de la platine. Ces informations peuvent concerner le mode média utilisé, la source du signal, le numéro de la chaîne l'émission en cours, l'heure, la température de la pièce,... De préférence, cet écran d'affichage est pivotant, de type LCD lumineux ou rétro éclairé et disposé à l'extrémité avant de la télécommande. Ainsi, l'utilisateur peut redresser l'écran face à lui de façon à avoir une bonne lisibilité desdites informations.

La télécommande et la platine peuvent communiquer par transmission de signaux infrarouge et / ou par transmission de signaux radiofréquence. La présente invention prévoit notamment le cas où, d'une part l'émetteur de la télécommande et le récepteur de la platine communiquent par transmission de signaux infrarouge; et d'autre part le récepteur de la télécommande et l'émetteur de la platine communiquent par transmission de signaux radiofréquence.

Avantageusement, on prévoit un module récepteur portatif équipé d'un écran d'affichage et apte à recevoir des signaux radiofréquence transmis par la platine. Dans ce cas, la lecture des informations peut se faire depuis n'importe quel endroit dans une maison par exemple.

A titre d'exemple, avec la carte électronique selon l'invention, la platine peut présenter une dimension compacte sensiblement de 350*300*90mm.

Selon un autre aspect de l'invention, il est proposé un système comprenant une platine de salon telle que décrite ci-dessus. Cette platine comprend au moins deux connecteurs péritel de sortie. L'un des deux connecteurs péritel est connecté à un premier module externe de transmission sans fil apte à transmettre les signaux audio et vidéo provenant du connecteur péritel connecté vers un seconde module de réception sans fil distant connecté via un câble péritel à un téléviseur.

Suivant un autre système de l'invention, la platine communique avec au moins un terminal Tv via un réseau numérique, ladite platine étant utilisée comme serveur multi-tâches apte à transmettre un flux audio/vidéo numérique. Le terminal Tv comprend une unité de traitement pour générer, à partir du flux audio/vidéo numérique :
- des signaux audio analogique et vidéo analogique entrelacé RVB accessibles via un connecteur péritel,
- un signal vidéo analogique progressif accessible via un connecteur VGA,
- un signal vidéo numérique au format DVI accessible via un connecteur DVI,
- un signal audio numérique accessible via un connecteur de type S/PDIF ou RCA, et
- un signal audio numérique et un signal vidéo numérique accessible via un connecteur de type HDMI.

Plus précisément, l'unité de traitement peut comprendre :
- un décodeur MPEG2 ou MPEG4 pour décoder le flux audio/vidéo numérique codé en MPEG2 ou MPEG4,
- un encodeur TV pour alimenter le connecteur péritel,
- un encodeur VGA pour alimenter le connecteur VGA,
- un formateur DVI pour formater le signal vidéo MPEG2 ou MPEG4 en un signal vidéo au format DVI transmis vers le connecteur DVI, et
- un encodeur audio numérique de type S/PDIF.

Le réseau numérique peut être de type WIFI 802.11g ou supérieur. Il peut être de type courant porteur en ligne ou encore de type Ethernet avec liaison par câble.

D'autres avantages et caractéristiques de l'invention apparaîtront à l'examen de la description détaillée d'un mode de mise en oeuvre nullement limitatif, et des dessins annexés, sur lesquels :
- La figure 1 est une vue schématique générale d'un système comprenant la platine selon l'invention, un téléviseur et un écran informatique de type moniteur;
- La figure 2 est une vue schématique générale d'une platine selon l'invention intégrée dans un environnement multi-utilisateurs et multi-tâches;
- La figure 3 est un schéma bloc simplifié d'une carte audio-vidéo fille connectée à une carte mère de façon à générer un flux audio/vidéo sur un connecteur péritel selon l'invention;
- La figure 4 est un schéma bloc simplifié d'une carte audio-vidéo fille connectée à une carte mère de façon à générer deux flux audio/vidéo indépendants sur deux connecteurs péritel selon l'invention;
- La figure 5 est une vue d'une télécommande à écran pivotant selon l'invention;
- La figure 6 est une autre vue schématique générale d'une platine selon l'invention intégrée dans un réseau WIFI multi-Tv et Multi médias;
- La figure 7 est une autre vue schématique générale d'une platine selon l'invention intégrée dans un environnement multi-Tv et Multi médias; la platine étant aussi utilisée comme micro-ordinateur; et
- La figure 8 est un schéma bloc simplifié d'un terminal Tv illustré sur les figures 6 et 7.

Bien que l'invention n'y soit pas limitée, on va maintenant décrire une platine selon l'invention basée sur une architecture d'ordinateur avec une carte mère dotée d'un processeur ou chipset graphique intégré (IGP) et destinée à recevoir une carte fille audio/vidéo-graphique dotée de moyens de traitement et de connecteurs selon l'invention.

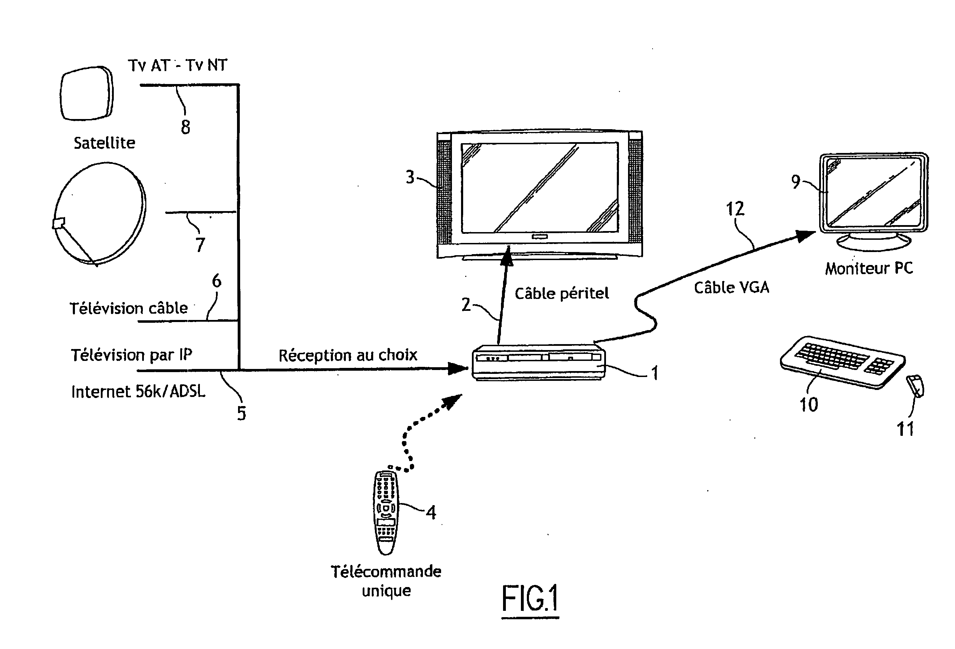

Sur la figure 1 on voit une platine 1 selon l'invention apte à recevoir des signaux TV provenant du réseau hertzien 8, d'une parabole 7 de réception satellite, du réseau TV-câblé 6 et d'une liaison ADSL 5. Cette liaison ADSL 5 permet également la connexion de la platine à Internet.

La platine 1 est équipée d'une carte mère et de cartes filles d'extension aptes à recevoir les signaux TV. D'une façon générale, elle comprend des éléments et fonctionnalités standard d'un micro-odinateur, notamment un micro-processeur, des mémoires vive et morte,un système d'exploitation... Elle comprend en particulier une interface logicielle spécifique pour sélectionner les différents signaux d'entrée et les modes médias (TV, magnétoscope,...).

Les cartes filles d'extension comprennent notamment un tuner TV analogique pour la TV hertzienne, un tuner décodeur pour la télévision numérique terrestre, un tuner décodeur pour la télévision par satellite, un tuner décodeur pour la télévision par câble et un modem décodeur pour la télévision par ADSL. En d'autres termes, la platine comprend un double tuner TV analogique/numérique ou numérique/numérique. Un tuner radio est également prévu.

La platine 1 comporte un connecteur péritel permettant de connecter un téléviseur 3 au moyen d'un câble péritel véhiculant l'audio et la vidéo. Elle comporte également un lecteur/graveur CD et DVD permettant notamment la lecture des éléments suivants :
Audio : WMA, MP3, Dolby Digital, DTS,...
Vidéo : WMV, Mpeg2/4, Jpeg, DivX,...

La carte mère est prévue pour notamment offrir une sortie audio numérique de type S/P DIF. On peut aussi obtenir un son de qualité home cinéma de type audio 2.1, 5.1 ou 7.1 par la sortie audio analogique de type PC.

La platine 1 comporte également un connecteur de type VGA pour connecter un écran informatique de type moniteur 9 via un câble VGA 12. A l'aide du clavier 10 et de la souris 11 avec ou sans fil, on peut donc utiliser la platine 1 comme un micro-ordinateur.

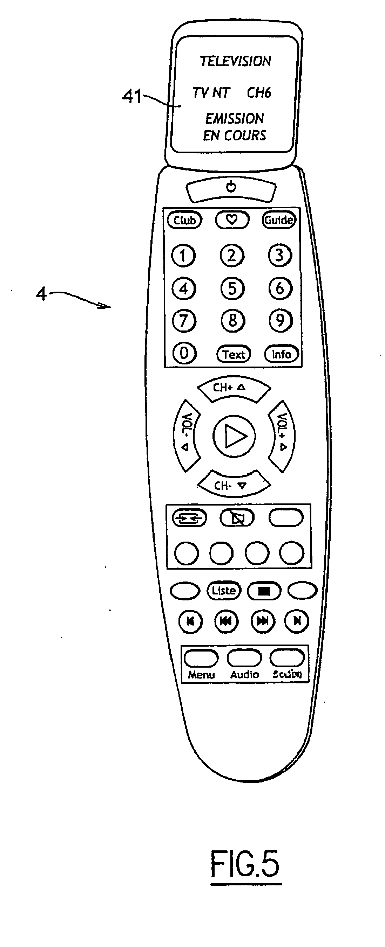

La télécommande 4 permet de commander la platine 1. La figure 5 est une vue de la télécommande 4 selon l'invention, équipée d'un écran LCD 41, du même type que celui d'un téléphone portable ou d'un afficheur lumineux et comportant trois lignes d'affichage par exemple. Cet écran est disposé à l'extrémité avant de la télécommande. Sa position relevable permet une bonne lecture des informations tout en pointant la télécommande vers la platine. La télécommande permet de naviguer dans l'interface logicielle mises en oeuvre dans la platine pour gérer l'ensemble des fonctionnalités (télévision, magnétoscope numérique, Home cinéma, DVD/CD, radio FM,...). Lorsqu'on choisit par exemple l'option "télévision" sur l'interface logicielle, le terme "télévision" est affiché sur la première ligne de cet écran 41. Puis lorsqu'on choisit la source du signal TV tel que par exemple la télévision numérique terrestre ainsi que la chaîne 6, "Tv NT chaîne 6" s'affiche sur la seconde ligne de l'écran. La troisième ligne permet l'affichage d'autres informations (telles que le titre de l'émission en cours) ou d'aides diverses sur l'utilisation de la platine de façon à éviter ou limiter le recours à un quelconque manuel d'utilisation trop souvent pénible à lire.

D'une façon générale, la platine présente des sorties aptes à connecter différents appareils tels qu'un téléviseur 16/9^{ème} ou 4/3, un rétro-projecteur, un vidéo-projecteur, un écran plasma, un écran LCD, un moniteur CRT ,un téléviseur Haute Définition ...

Les signaux TV reçus par la platine sont numérisés si nécessaires et formatés au format MPEG2 ou MPEG4 pour les fonctions de magnétoscope numérique : enregistrement direct, "timeshifting", guide de programme (EPG)...

Par ailleurs, la platine comprend une application logicielle proposant une interface rapide, ergonomique et utilisant un vocabulaire traditionnel pour des utilisateurs non spécialisés en informatique ou en multimédia. Cette interface permet de piloter les fonctions suivantes :
- télévision et radio FM,
- Modules CAM ("Common Acces Module" en anglais) multi-formats pour la réception de la télévision cryptée,
- magnétoscope numérique,
- archivage pour export données multimédia, avec graveur DVD
- lecteur CD/DVD,
- audio 5.1 et qualité home cinéma.

L'interface évite par ailleurs l'utilisation des différents modes standards AV1, AV2, AV3 et TV/Vidéo des téléviseurs, ce qui est compliqué avec les télécommandes actuelles.

Par ces capacités micro-informatique, la platine peut être utilisée comme console de jeux de type PC.

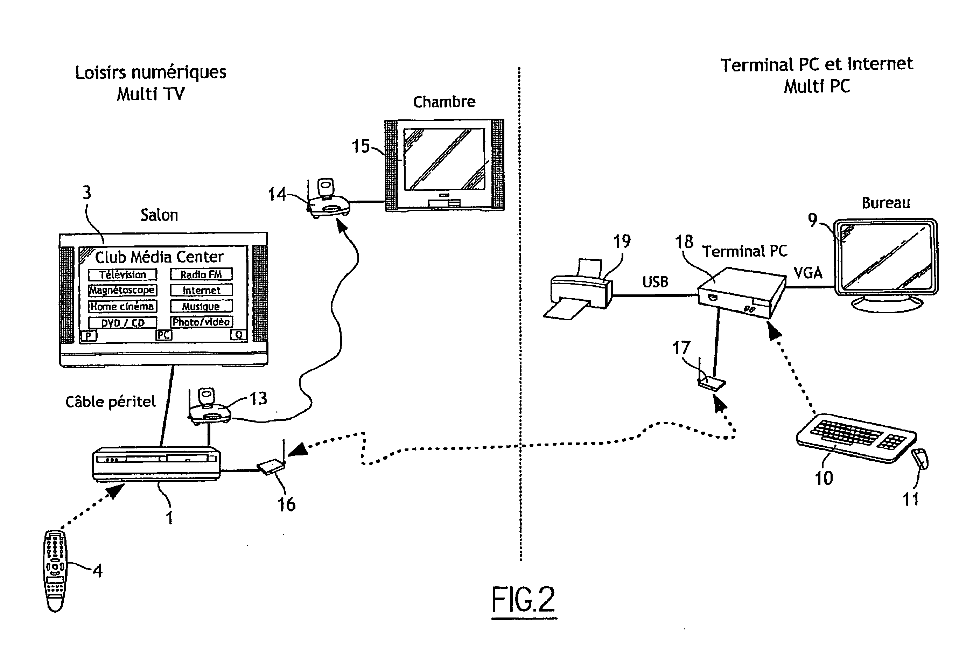

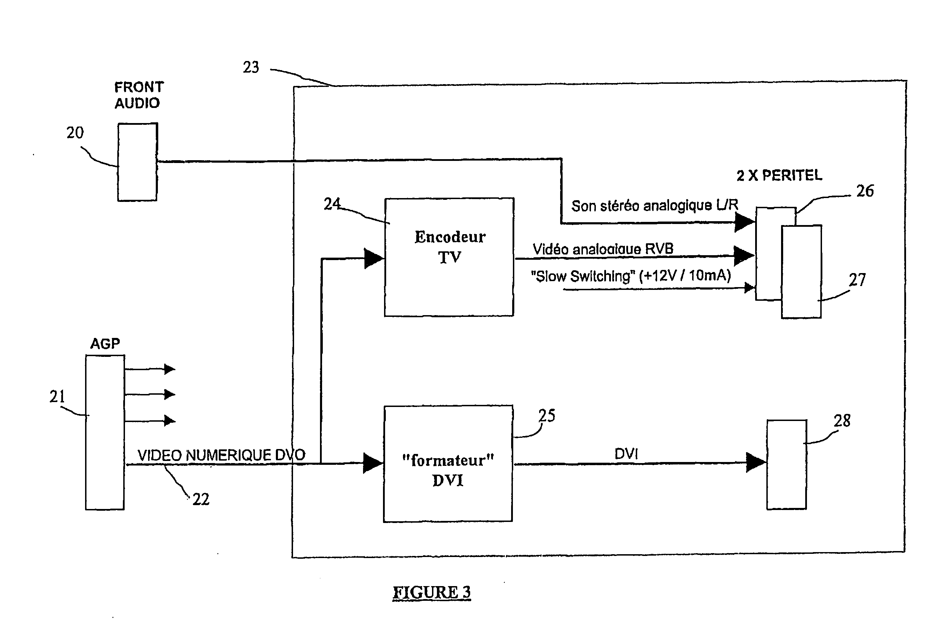

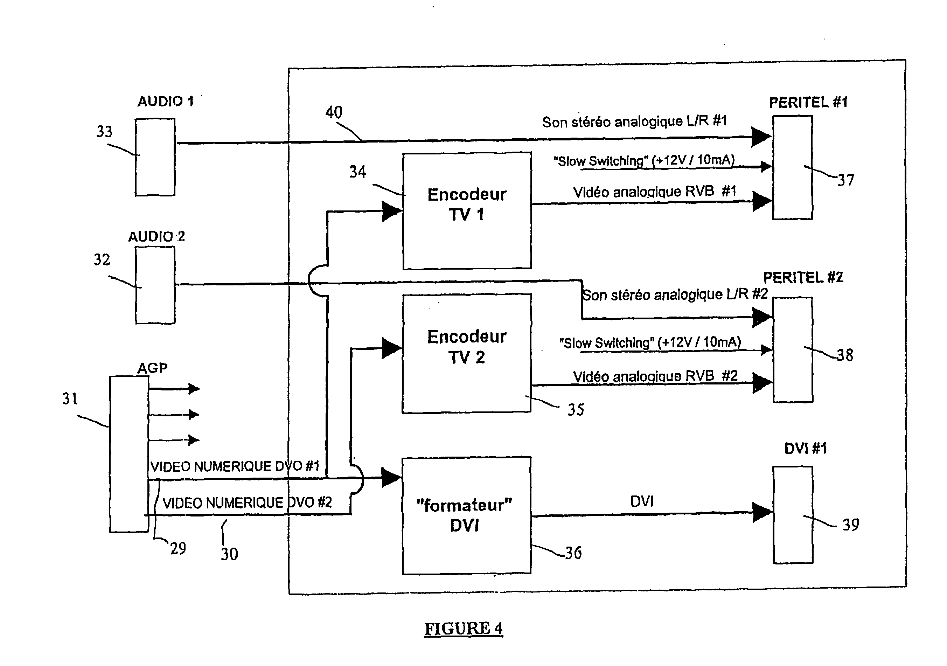

Sur la figure 2, la platine 1 comporte un second connecteur péritel auquel est connecté un module 13 de transmission sans fil. Les signaux audio et vidéo reçus par ce module 13 sont transmis vers un module 14 de réception de signaux qui est placé à distance, par exemple dans une autre pièce que la platine 1. Le module 14 alimente un second téléviseur 15. Ce téléviseur peut diffuser la même émission que celle diffusée par le téléviseur 3 ou une émission différente comme on le verra avec les figures 3 et 4. Les deux modules 13 et 14 communiquent par transmission de flux audio et vidéo par ondes à 2.4 GHz. L'utilisateur du téléviseur 15 peut également utiliser une même télécommande 4 pour commander les fonctions de la platine. Dans ce cas, la télécommande pilote ( par la voie de retour radio fréquence à 433 MHz du transmetteur sans fil )les options de l'interface.

Par ailleurs, la platine 1 comporte une carte Wi-fi 16 insérée dans la carte mère ou externe telle que représentée sur la figure 2. Cette carte Wi-fi 16 permet de constituer un réseau informatique sans fil avec un module Wi-fi 17 distant. Un micro-ordinateur 18, associé aux périphériques tels qu'une imprimante 19, le clavier 10, la souris 11 et l'écran 9, peut accéder à la platine 1 via le réseau Wi-fi.

Sur la figure 3 on voit un premier mode de réalisation d'une carte fille selon l'invention. Ce premier mode permet d'obtenir en sortie de la platine, deux connecteurs péritel véhiculant le même flux audio/vidéo, et une sortie de type DVI. Pour ce faire, on utilise par exemple une carte mère comprenant un microprocesseur graphique intégré IGP ou un "chipset" de marque Nvidia-nf2® ( ou VIA KM 400 A ou INTEL 915 G ) offrant la particularité de pouvoir récupérer sur un port AGP un flux vidéo numérique (DVO). En ce qui concerne le flux audio, on utilise la sortie audio stéréo existant sur la carte mère sous la forme de "pin header" appelé "front audio", cette sortie mettant à disposition le son stéréo de base, gauche et droite, du circuit audio. Sur la figure 3 sont représentés le "front audio" 20 et le port AGP 21 fournissant un flux vidéo numérique 22. La carte fille 23 selon l'invention est prévue pour se connecter aux sorties 20 et 21 de façon à permettre les fonctions suivantes :
- encodage de la vidéo numérique (DVO) en vidéo analogique entrelacé, avec RVB séparés,
- formatage de la vidéo numérique (DVO) en numérique DVI,
- regroupement de la vidéo analogique entrelacé avec l'audio L & R stéréo,
- constitution d'une base de connexion pour y raccorder des câbles de deux connecteurs péritel à fixer sur l'arrière du boîtier.

Les deux connecteurs péritel fournissent un même flux audio/vidéo simultanément. On peut ainsi envisager la connexion d'un module de transmission sans fil comme on peut le voir sur la figure 2. Une même émission peut donc être visualisée sur deux, ou plusieurs, téléviseurs de façon simultanée.

Plus précisément, la carte fille 23 comporte un encodeur 24 pour générer le signal vidéo analogique entrelacé avec les couleurs Rouge, Vert et Bleu séparées, à partir du signal vidéo numérique 22. Le signal vidéo analogique et le son stéréo sont dirigés vers les deux connecteurs péritel 26 et 27. Une entrée "slow switching" sur les figures 3 et 4 permet de passer automatiquement sur le mode AV correspondant au port de la prise péritel correspondante, et de la reconnaître par défaut.

Par ailleurs, l'encodeur 25 permet de formater le signal vidéo numérique 22 en un signal vidéo numérique de type DVI. Un connecteur DVI 28 est fixé sur l'arrière de la platine.

Un autre mode de réalisation est illustré sur la figure 4 où l'on utilise ici une carte mère Asus P5GDC-V Deluxe ® à base de "chipset" Intel@ 915 G. Cette carte mère permet de gérer deux flux vidéo indépendants, donc possibilité d'affichage indépendante sur deux écrans. Les deux flux vidéo numériques indépendants 29 et 30 sont disponibles depuis le port AGP 31. D'autres ports peuvent être utilisés comme par exemple le port PCI Express@ offrant une grande bande passante. Le premier signal vidéo numérique 29 alimente un formateur DVI 36 générant un signal vidéo numérique DVI vers le connecteur DVI 39 de sortie. Ce premier signal vidéo numérique 29 alimente également un premier encodeur TV 34 générant un signal vidéo analogique pour un premier connecteur péritel 37. Le son stéréo 40 généré par un "front audio" de la carte mère alimente également ce premier connecteur péritel 37.

Par contre, le second signal vidéo numérique 30 alimente un second encodeur TV 35 générant alors un second signal vidéo analogique pour un second connecteur péritel 38. Pour obtenir un second son stéréo indépendant, on insère une carte son deux-canaux (L R mono/stéréo) dans la carte mère et la sortie 32 de cette nouvelle carte son est dirigée vers le second connecteur péritel 38. Bien entendu, la nouvelle carte son gère le son correspondant au flux vidéo 30. Ainsi, les deux connecteurs péritel 37 et 38 offrent deux flux audio/vidéo indépendants. La platine est ainsi multimédia, multi-tâches et multi-utilisateurs.

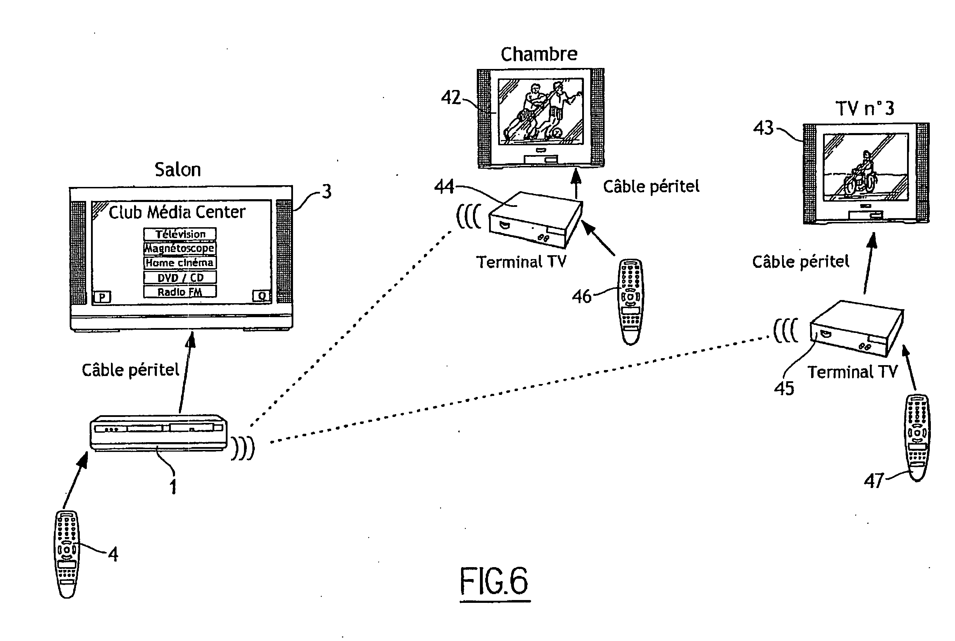

On peut aussi utiliser la platine multifonctions comme serveur numérique pour alimenter plusieurs terminaux de type Tv en mode multi-postes et simultanément en mode multi-tâches. Par exemple, sur la figure 6, on voit une solution à partir d'un flux audio/vidéo numérique codé MPEG2 transmis depuis la platine multifonctions, par un réseau de type Ethernet avec ou sans fil. Le réseau numérique est formé avec deux autres terminaux Tv identiques 44 et 45.

Il s'agit alors d'un terminal client de type dynamique léger et connecté par prise péritel à un téléviseur, respectivement 42 et 43. La platine 1 est utilisée comme serveur informatique apte à transmettre sous forme numérique codé MPEG2 un signal audio numérique accessible via un connecteur de type S/PDIF.
des programmes différents simultanément vers chaque terminal Tv 44 et 45. On peut donc visualiser en même temps des programmes différents dans les téléviseurs 42 et 43. Par ailleurs, chaque terminal est équipé d'une interface logicielle pilotée par une télécommande 46, 47.

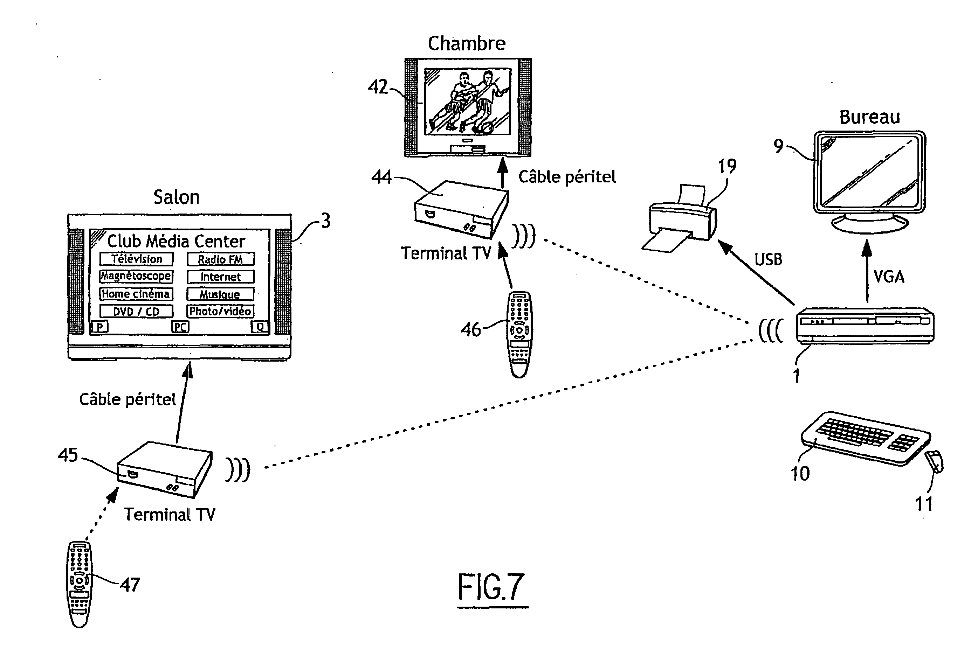

La figure 7 reprend les éléments de la figure 6, mais avec la platine 1 reliée à un moniteur informatique par câble VGA. Elle est utilisée comme micro-ordinateur et comme serveur Tv pour les terminaux Tv 44 et 45 au sein d'un réseau numérique.

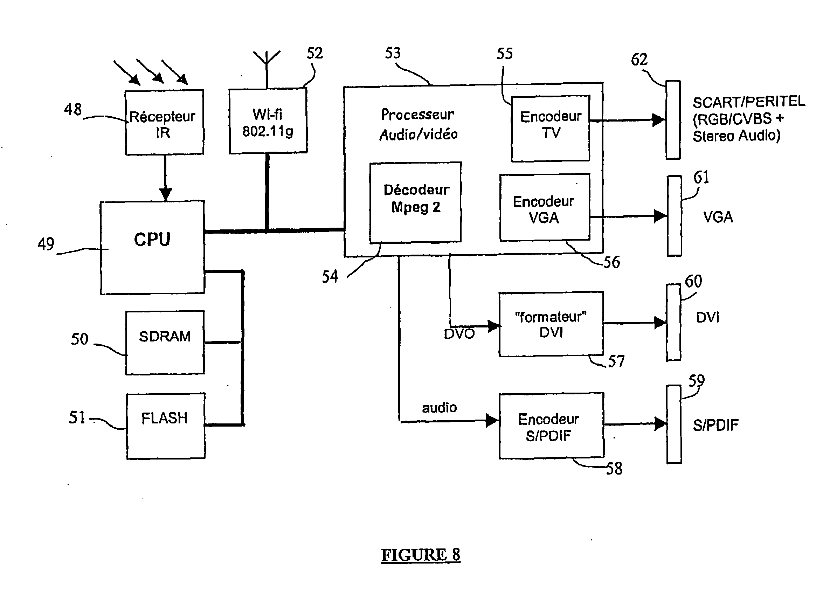

Sur la figure 8 on voit un exemple de réalisation d'un terminal Tv 44, 45. Ce terminal comporte au moins un module IR 48,un processeur cpu 49, une flash rom 51, une ram 50, un système d'exploitation et une interface logicielle. Un module de communication sans fil WIFI 802.11g permet de connecter le terminal au réseau numérique sans fil. Le flux numérique MPEG2 ou MPEG4 ou autre transmis par la platine 1 est reçu par ce module WIFI puis transmis vers une unité de traitement audio/vidéo 53. Un décodeur MPEG2 54 permet de fournir un signal vidéo numérique qui alimente :
- un encodeur Tv 55 pour générer un signal, vidéo analogique de sortie via un connecteur péritel ou scart 62,
- un encodeur analogique progressif VGA 56 pour générer un signal vidéo analogique de sortie via un connecteur VGA 61, et
- un formateur DVI 57 pour formater le signal vidéo numérique issu du décodage MPEG2 en signal numérique de type DVI vers un connecteur DVI 60.

Le décodeur 54 fournit également un flux audio numérique qui est encodé en un signal de type S/PDIF par l'encodeur 58 pour le connecteur S/PDIF 59. Un convertisseur numérique analogique permet de fournir le signal audio analogique mono ou stéréo NICAM pour le connecteur péritel 62.

Le terminal Tv comporte donc les trois mêmes sorties vidéo (Scart, VGA, DVI) et les deux mêmes sorties audio(mono-stéréo L&R et audio numérique) que la platine multifonctions 1.

Ainsi, les différents téléviseurs de la maison peuvent être regardés à tout moment ou simultanément. L'interface logicielle permet de commander des programmes différents.

Les téléviseurs fonctionnent ainsi en multi-postes et en multi-tâches .

Bien sûr, l'invention n'est pas limitée aux exemples qui viennent d'être décrits et de nombreux aménagements peuvent être apportés à ces exemples sans sortir du cadre de l'invention. D'autres cartes mère ou "chipset" équivalents peuvent être utilisés, et la platine peut comporter plus de deux sorties péritel.

## Revendications

1. Platine de salon multifonction comprenant des moyens de réception et de décodage pour recevoir des signaux numériques de transmission TV ; cette platine comprenant :
- des moyens de réception de signaux de télévision numérique,
- des moyens de décodage des flux audio/vidéo numériques;
**caractérisée en ce qu'**elle comprend des moyens de stockage numérique pour une utilisation comme magnétoscope numérique ainsi qu'un graveur multi format DVD pour archiver le contenu desdits moyens de stockage ou, directement des signaux de télévision.

2. Platine selon la revendication 1, **caractérisée en ce que** la carte électronique comprend en outre un connecteur de sortie de type HDMI fournissant de la vidéo et de l'audio numériques.

3. Platine selon l'une quelconque des revendications précédentes, **caractérisée en ce qu'**elle comprend en outre un ou plusieurs connecteur(s) péritel apte(s) à fournir simultanément les mêmes signaux audio et vidéo.

4. Platine selon l'une quelconque des revendications précédentes, **caractérisée en ce qu'**elle comprend en outre des moyens de connexion à un réseau de communication de type Ethernet.

5. Platine selon l'une quelconque des revendications précédentes, **caractérisée en ce que** des signaux de transmission TV proviennent d'un réseau hertzien.

6. Platine selon l'une quelconque des revendications précédentes, **caractérisée en ce que** des signaux de transmission TV proviennent d'un réseau satellite.

7. Platine selon l'une quelconque des revendications précédentes, **caractérisée en ce que** des signaux de transmission TV proviennent d'un réseau câblé.

8. Platine selon l'une quelconque des revendications précédentes, **caractérisée en ce que** des signaux de transmission TV proviennent d'un réseau IP ou ADSL.

9. Platine selon l'une quelconque des revendications précédentes, **caractérisée en ce qu'**elle comprend des moyens de décryptage pour décoder des signaux de transmission TV transmis sous forme codée.

10. Platine selon l'une quelconque des revendications précédentes, **caractérisée en ce que** les moyens de stockage comprennent un disque dur de façon à enregistrer des signaux audio/vidéo numériques reçus par la platine.

11. Platine selon l'une quelconque des revendications précédentes, **caractérisée en ce qu'**elle comprend en outre un graveur lecteur multi format CD/DVD.

12. Platine selon l'une quelconque des revendications précédentes, **caractérisée en ce que** la carte électronique comprend en outre des moyens pour générer en sortie un flux audio numérique multicanaux pour une utilisation de qualité "home cinéma".

13. Système comprenant une platine multifonctions selon l'une quelconque des revendications 1 à 12, **caractérisé en ce qu'**il comprend en outre au moins un terminal secondaire Tv communiquant avec la platine via un réseau Ethernet, ladite platine étant utilisée comme serveur multi-tâches apte à transmettre un flux audio/vidéo numérique; et **en ce que** le terminal secondaire Tv comprend une unité de traitement pour générer, à partir du flux audio/vidéo numérique :
- un signal audio numérique et un signal vidéo numérique accessible via un connecteur de type HDMI.
- des signaux audio analogique et vidéo analogique entrelacé RVB accessibles via un connecteur péritel, ou ensemble de connecteurs RCA.
- un signal audio numérique accessible via un connecteur de type S/PDIF,

14. Système selon la revendication 13, **caractérisé en ce que** l'unité de traitement comprend :
- un décodeur MPEG 2/ MPEG 4 pour décoder le flux audio/vidéo numérique codé en MPEG2 ou MPEG 4.
